# FASCICULE DE BREVET EUROPEEN

(11) **EP 2 984 149 B1**
(45) Date de publication et mention de la délivrance du brevet: **25.06.2025**
(21) Numéro de dépôt: 14716815.7
(22) Date de dépôt: 10.04.2014
(51) Int. Cl.: C09K 8/68, C09K 8/88

(54) **FLUIDES DE FRACTURATION A BASE DE POLYMERES ASSOCIATIFS ET DE TENSIOACTIFS LABILES**
FRAKTURIERUNGSFLÜSSIGKEITEN AUF BASIS VON ASSOZIATIVEN POLYMEREN UND LABILEN TENSIDEN
FRACTURING FLUIDS BASED ON ASSOCIATIVE POLYMERS AND ON LABILE SURFACTANTS

(30) Priorité: 11.04.2013 FR 1300864
(43) Date de publication de la demande: 17.02.2016
(73) Titulaire: Energy Solutions (US) LLC, Princeton, NJ 08540 (US)
(72) Inventeur: CADIX, Arnaud, F-93400 Saint Ouen (FR); WILSON, David James, F-60580 Coye La Foret (FR)
(74) Mandataire: Osha BWB
(86) Numéro de dépôt international: PCT/EP2014/057275
(87) Numéro de publication internationale: WO 2014/167056

(56) Documents cités:
- GB-A- 2 383 355
- US-A- 6 150 445
- US-A1- 2005 065 038
- US-A1- 2006 128 846
- US-A1- 2012 135 895
- LACIK I ET AL: "Compositional heterogeneity effects in hydrophobically associating water-soluble polymers prepared by micellar copolymerization", POLYMER, ELSEVIER SCIENCE PUBLISHERS B.V, GB, vol. 36, no. 16, 1 August 1995 (1995-08-01), pages 3197 - 3211, XP004025660, ISSN: 0032-3861, DOI: 10.1016/0032-3861(95)97884-I

## Description

La présente invention a trait au domaine des techniques de fracturation employées dans le cadre de l'extraction pétrolière.

La fracturation hydraulique est une technique couramment employée dans le domaine de la récupération de pétrole et de gaz dans des réservoirs hydrocarbonés, qui a pour but de créer des fractures au sein du réservoir pour augmenter les interfaces d'échanges entre les fluides d'extraction et les hydrocarbures contenus dans le réservoir.

La fracturation met généralement en oeuvre une injection sous forte pression de fluides de fracturation aqueux comprenant des polymères conférant au fluide une viscosité élevée. L'injection de ces fluides au sein de réservoirs hydrocarbonés (le terme de réservoir hydrocarboné inclut au sens de la présente description en particulier les roches réservoirs) implique en général la mise en oeuvre de pressions considérables qui, d'une part impliquent des dépenses énergétiques en termes de pompage et d'autre part peuvent dégrader les polymères sous l'effet du cisaillement. En effet, typiquement, un fluide de fracturation est injecté depuis la surface jusqu'au sein d'un réservoir hydrocarboné sur des distances de l'ordre de quelques milliers de mètres.

Les documents GB 2 383 355 A et US2006/128846 décrivent des fluides de traitements aqueux comprenant un polymère hydrophile modifié hydrophobiquement combiné à un tensioactif.

Un but de la présente invention est de fournir des fluides de fracturation à base de polymères viscosants qui présentent une efficacité similaire aux fluides connus, mais qui soient plus aisément injectables, en permettant entre autres de réduire l'énergie nécessaire à leur injection, et pour lesquels les phénomènes de dégradation des polymères viscosants sous cisaillement sont de préférence réduits voire nuls.

A cet effet, il est proposé selon la présente invention un nouveau type de fluide de fracturation, qui comprend, en milieu aqueux :
(i) des polymères associatifs qui sont intrinsèquement propres à augmenter la viscosité du milieu aqueux, voire à le gélifier ; et
(ii) au moins un tensioactif labile porteur d'une fonction clivable qui est une fonction ester présent en une quantité suffisante pour réduire ou inhiber l'effet d'augmentation de la viscosité induit par lesdits polymères associatifs lors de l'injection et qui se dégrade après l'injection dans les conditions de température et de pH du réservoir hydrocarboné dans lequel il est introduit ce par quoi la viscosité du fluide augmente après injection.

Plus précisément, selon un premier aspect, la présente invention a pour objet un fluide de fracturation comprenant, en milieu aqueux :
- un polymère associatif ; et
- un tensioactif labile porteur d'une fonction clivable qui est une fonction ester en une quantité suffisante pour réduire ou inhiber l'effet d'augmentation de la viscosité induit par lesdits polymères associatifs ;

dans lequel le tensioactif labile est de formule suivante : 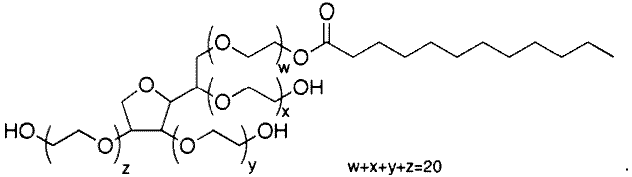
dans lequel le polymère associatif comporte un squelette de nature hydrophile et inclut, le long des chaînes et/ou à tout ou partie des extrémités de celles-ci, des quantités de l'ordre de 0,001% à 10% en mole de fonctions de nature hydrophobes ;
dans lequel le polymère associatif est présent à hauteur de 0,1% à 3% en masse par rapport à la masse totale du fluide de fracturation ; et
dans lequel le polymère associatif et la concentration du tensioactif labile sont choisis de façon à ce que la viscosité du fluide de fracturation soit maintenue réduite lors de l'injection du fluide de fracturation jusqu'à une zone où on souhaite effectuer la fracturation, la viscosité étant maintenue réduite par rapport à la viscosité qu'aurait le fluide de fracturation sans le tensioactif labile.

Selon un autre aspect, l'invention concerne l'utilisation des fluides précités comme fluide de fracturation. Dans ce cadre, l'invention a notamment pour objet un procédé de récupération d'hydrocarbures dans un réservoir hydrocarboné, comprenant une étape ou un fluide de fracturation du type précité est injecté au sein d'un réservoir hydrocarboné où les conditions de température et/ou de pH sont propres à lyser tout ou partie du tensioactif labile.

Par « polymère associatif », on entend, au sens de la présente description, un polymère propre à augmenter la viscosité d'un milieu aqueux par des associations impliquant des interactions hydrophobe-hydrophobe entre les polymères. De tels polymères sont également parfois désignés sous le nom de « polymères hydrosolubles hydrophobiquement associatifs » (PHA) ou bien encore « polymères amphiphiles ». Il s'agit, dans le cadre de la définition selon la revendication 1, de polymères comportant un squelette de nature hydrophile et incluant, le long des chaînes et/ou à tout ou partie des extrémités de celles-ci, des quantités de l'ordre de 0,001% à 10% en mole, et généralement quelques pourcents molaires tout au plus, de fonctions de nature hydrophobes. Lorsque de tels polymères sont mis en milieu aqueux, ils forment, de façon connue en soi, des liens hydrophobes (les fonctions hydrophobes se regroupent entre elles pour diminuer l'énergie du système, de la même façon que se forme en milieu aqueux des micelles de tensioactif).

Par ailleurs, la notion de « tensioactif labile » (ou « cleavable surfactant » en anglais) désigne ici un tensioactif qui est propre à se lyser, typiquement en se clivant en deux molécules distinctes, dans des conditions de pH et de température où au moins une partie des polymères associatifs auquel il est associé dans la composition ne sont pas dégradés. Les tensioactif clivable employés selon l'invention sont des tensiaoctifs porteurs d'une fonction clivable qui est une fonction ester, qui se dégradent après injection, dans des conditions où les polymères associatifs ne sont pas dégradés. Des tensioactifs labiles de ce type sont bien connus de la littérature. Pour plus de détails, on pourra notamment se reporter à *"Cleavable surfactants"* Alireza Tehrani-Bagha, Krister Holm.

L'emploi spécifique d'un tensioactif labile confère au fluide de fracturation selon l'invention les avantages des fluides de fracturation connus en s'affranchissant de leurs inconvénients. En effet, du fait de la présence de ce tensioactif labile, le fluide de fracturation présente, lorsqu'il est injecté, une viscosité réduite qui facilite son injection, et la viscosité est rétablie dans la zone où on souhaite effectuer la fracturation.

L'abaissement de la viscosité obtenu de par la présence du tensioactif labile permet de réduire sensiblement les phénomènes de perte de charge et, dans le cas où on utilise des polymères sensibles à la dégradation, une diminution de la dégradation des polymères sous cisaillement.

De plus, la nature des polymères associatifs présents dans les fluides de fracturation de la présente invention est très modulable.

En particulier, selon un mode de réalisation intéressant, les fluides de fracturation de l'invention peuvent avantageusement comprendre à titre de polymères associatifs des polymères amphiphiles de relativement bas poids moléculaire (par exemple inférieur à 1 000 000 g/mol, voire à 500 000 g/mol par exemple inférieur à 100 000 g/mol) qui permettent d'induire des viscosités élevées après lyse du tensioactif labile, et ce à partir de concentrations relativement faibles, et qui sont en outre moins sensibles à la dégradation sous cisaillement que des polymères de taille plus importante.

En pratique, quasiment tous les polymères associatifs peuvent être utilisés selon l'invention. A ce sujet, il est à noter qu'en plus des avantages précités, le tensioactif labile présent dans les compositions de l'invention permet d'améliorer l'hydratation des polymères en milieu aqueux, ce qui permet d'utiliser dans les compositions de l'invention n'importe quel type de polymère associatif, y compris ceux réputés les moins hydratables. L'invention ouvre ainsi la voie à une utilisation de nombreux polymères amphiphiles dans des liquides de fracturation.

Compte tenu de la large gamme de polymères utilisable en combinaison avec les tensioactifs tel que définis dans la revendication 1 dans le cadre de l'invention, la méthode de fracturation décrite ici est extrêmement modulable. En effectuant un choix adapté de polymère, on peut fournir selon l'invention aussi bien des fluides de fracturation pour lesquels une viscosité élevée sera récupérée au bout de quelques mètres seulement que des fluides pour lesquels la viscosité reste faible jusqu'à la zone de fracturation.

Il est possible de moduler finement le comportement du fluide de fracturation pour adapter l'évolution de sa viscosité le long de la zone d'injection. En fonction du polymère et du tensioactif utilisés, il est des compétences de l'homme du métier d'adapté les concentrations des deux composés pour obtenir le profil d'évolution de viscosité souhaité. Avant la lyse des tensioactifs labiles, les polymères associatifs et les tensioactifs interagissent selon un mécanisme connu, décrit notamment dans *"*Interactions between hydrophobically modified polymers and surfactants" B. Magny, I. Iliopoulos, R. Audebert, L. Piculell, B. Lindman Progress in Colloid & Polymer Science Volume 89, 1992, pp 118-121.

Les interactions entre polymères associatifs et tensioactifs varient de façon connue en soi en fonction de la teneur en tensioactif. Lorsqu'on ajoute une très faible quantité de tensioactifs, cette faible quantité de tensioactif densifie le nombre de liaisons hydrophobes, ce qui fait croître la viscosité. A faible teneur en tensioactif, la viscosité croît ainsi jusqu'à un maximum au fur et à mesure de l'ajout de tensioactif. Au-delà de la teneur limite en tensioactif pour laquelle on observe ce maximum, la tendance s'inverse et l'ajout de tensioactif fait au contraire décroître de plus en plus les interactions entre les polymères et donc la viscosité. Pour tout couple de tensioactif et de polymère, il y a une concentration minimale en tensioactif au-delà de laquelle on obtient une décroissance systématique de la viscosité, cette concentration minimale étant très aisée à déterminer.

Selon le premier aspect de la présente description, le polymère associatif et la concentration du tensioactif labile sont choisis de façon à ce à ce que la viscosité du fluide de fracturation soit maintenue réduite lors de l'injection du fluide de fracturation jusqu'à une zone où on souhaite effectuer la fracturation, la viscosité étant maintenue réduite par rapport à la viscosité qu'aurait le fluide de fracturation sans le tensioactif labile.

En plus des avantages précités, les polymères associatifs employés dans le cadre de la présente invention induisent en général des propriétés rhéologiques du fluide de fracturation qui le rendent propre à assurer un contrôle efficace de la fracturation.

La rhéologie particulière des fluides de fracturation de l'invention sont en outre généralement très bien adaptés pour véhiculer efficacement des agents de soutènement en suspension. Ces agents de soutènement (dits également « proppant » en anglais) sont des particules destinées à consolider et à maintenir ouvertes les fractures en s'y glissant lors de leur formation (il s'agit typiquement de sable calibré).

Par ailleurs, les polymères associatifs employés dans les fluides de fracturation de l'invention présentent l'avantage de pouvoir être employés en présence de sels (la présence de sels améliore d'ailleurs en général leur caractère associatif), ce qui autorise l'emploi de l'eau immédiatement disponible dans l'environnement proche de la zone d'extraction sans avoir à se soucier de sa pureté ou de sa teneur en sels. Les polymères associatifs de l'invention constituent en cela une alternative intéressante aux polymères usuellement utilisés en fracturation du type des polysaccharides (tels que les guars réticulés par du borate ou du zirconate, pour lesquels la qualité de l'eau employée est déterminante). Ainsi, en particulier, l'invention se prête bien à la formulation de fluides de fracturation à base d'eau de mer ou d'eau de production et plus généralement de toute eau pouvant contenir des sels (y compris à des teneurs élevées pouvant aller jusqu'à 25% en masse et/ou avec des duretés importantes pouvant aller jusqu'à des teneurs en Mg²⁺ et Ca²⁺ de l'ordre de 5000 ppm) : selon un mode particulier, le fluide de fracturation de l'invention comprend de l'eau de mer ou de l'eau de production à titre de milieu aqueux.

Différentes caractéristiques et modes de réalisation plus particuliers de l'invention vont maintenant être exposés plus en détails :

### les polymères associatifs :

Les polymères employés selon l'invention peuvent varier en une assez large mesure, pourvu qu'ils tombent sous la définition de la revendication 1.

Ils peuvent par exemple être choisis parmi les polymères décrits dans US4529523, US4432881, US4814096, WO 85/03510, US4702319, US4709759, US4638865, US4780517, US4852652 ou US4861499.
Plus généralement, il peut s'agit de polymères associatifs à base d'un squelette hydrophile porteur de groupements hydrophobes du type obtenu par les voies de synthèse de type HASE (voie de synthèse directe) ou de type HEUR (post addition de groupes hydrophobe sur une chaîne hydrophile). Des exemples de synthèse de ce type sont notamment décrites dans Prog. Color Colorants Coat. Vol 4, pp. 71-77 (2011).

On peut par ailleurs utiliser des polymères associatifs issu de procédés dits de "polymérisation radicalaire micellaire" du type décrits dans US 4,432,881 ou bien encore dans Polymer, vol. 36 , N° 16, pp. 3197-3211 (1996), auxquels on pourra se reporter pour plus de détails, par copolymérisation de monomères hydrophiles et de monomères hydrophobes au sein d'un milieu dispersant aqueux (typiquement de l'eau ou un mélange eau/alcool) qui comprend :
- les monomères hydrophiles à l'état solubilisé ou dispersé dans ledit milieu ; et
- les monomères hydrophobes au sein de micelles de tensioactif formées dans ledit milieu en y introduisant ce tensioactif à une concentration supérieure à sa concentration micellaire critique (cmc).

Selon un mode particulier, les monomères hydrophobes présents au sein de micelles de tensioactifs employés en polymérisation micellaire peuvent être des monomères qui, en eux-mêmes ont la propriété de former des micelles sans avoir besoin d'ajouter des tensioactifs additionnels (monomères dits «auto-micellisables» dans la suite de la description). Selon ce mode particulier, le tensioactif employé peut être le monomère hydrophobe auto-micellisable lui-même, employé sans autre tensioactif, bien que la présence d'un tel tensioactif additionnel ne soit pas exclue. Ainsi, au sens de la présente description, lorsqu'il est fait mention de monomères hydrophobes au sein de micelles de tensioactifs, cette notion englobe aussi bien (i) des monomères hydrophobes présent au sein de micelles de tensioactif autre que ces monomères que (ii) des monomères comprenant au moins une partie ou un bloc hydrophobe et formant par eux-mêmes les micelles en milieu aqueux. Les deux modes (i) et (ii) précités sont compatibles et peuvent coexister (monomères hydrophobes au sein de micelles formées par un autre monomère auto-micellisables par exemple, ou bien encore micelles comprenant une association de tensioactifs et de monomères auto-micellisables).

En polymérisation micellaire, les monomères hydrophobes contenus dans les micelles sont dits en "solution micellaire". La solution micellaire à laquelle il est fait référence est un système micro-hétérogène qui est généralement isotrope, optiquement transparent et thermodynamiquement stable.
Selon un mode de réalisation intéressant, les polymères associatifs employés selon la présente invention sont des polymères obtenus selon un procédé de qui comprend une étape (E) de polymérisation radicalaire micellaire dans laquelle on met en contact, au sein d'un milieu aqueux (M) :
- des monomères hydrophiles, solubilisés ou dispersés dans ledit milieu aqueux (M) ;
- des monomères hydrophobes sous la forme d'une solution micellaire, à savoir contenant, à l'état dispersé au sein du milieu (M), des micelles comprenant ces monomères hydrophobes (cet état dispersé pouvant notamment être obtenu à l'aide d'au moins un tensioactif);
- au moins un amorceur de polymérisation radicalaire, cet amorceur étant typiquement hydrosoluble ou hydrodispersible ; et
- au moins un agent de contrôle de polymérisation radicalaire.

Le milieu aqueux (M) employé dans l'étape (E) est un milieu comprenant de l'eau, de préférence à hauteur d'au moins 50% en masse, voire au moins 80%, par exemple au moins 90%, voire au moins 95%. Ce milieu aqueux peut éventuellement comprendre d'autres solvants que l'eau, par exemple un alcool miscible à l'eau. Ainsi, le milieu (M) peut être par exemple un mélange hydroalcoolique. Selon une variante possible, le milieu (M) peut comprendre d'autres solvants, de préférence en une concentration où ledit solvant est miscible à l'eau, ce qui peut notamment permettre de réduire la quantité de tensioactifs stabilisants employés. Ainsi, par exemple, le milieu (M) peut comprendre du pentanol, ou tout autre additif permettant de moduler le nombre d'agrégation des tensioactifs. De façon générale, il est préférable que le milieu (M) soit une phase continue d'eau et constituée d'un ou plusieurs solvants et/ou additifs miscibles entre eux et dans l'eau dans les concentrations où ils sont employés.

Par *"agent de contrôle de polymérisation radicalaire",* on entend, au sens de la présente description, un composé capable de rallonger le temps de vie des chaînes polymères en croissance dans une réaction de polymérisation et de conférer à la polymérisation un caractère vivant ou contrôlé. Cet agent de contrôle est typiquement un agent de transfert réversible tel que mis en œuvre dans les polymérisations radicalaires contrôlées désignés sous la terminologie RAFT ou MADIX, qui mettent typiquement en œuvre un procédé de transfert réversible par addition-fragmentation, comme ceux décrits par exemple dans WO96/30421, WO 98/01478, WO 99/35178, WO 98/58974, WO 00/75207, WO 01/42312, WO 99/35177, WO 99/31144, FR2794464 ou WO 02/26836.

Selon un mode de réalisation intéressant, l'agent de contrôle de polymérisation radicalaire employé dans l'étape (E) est un composé qui comprend un groupe thiocarbonylthio -S(C=S)-. Ainsi, par exemple, il peut s'agir d'un composé qui comprend un groupe xanthate (porteur de fonctions -SC=S-O-), par exemple un xanthate. Un xanthate adapté est le Rhodixan A1 disponible aauprès de la société Solvay. D'autres types d'agent de contrôle peuvent être envisagés (par exemple du type de ceux employé en CRP ou en ATRP).

Selon un mode particulier, l'agent de contrôle employé dans l'étape (E) peut être une chaîne polymère issue d'une polymérisation radicalaire contrôlée et porteuse d'un groupement propre à contrôler une polymérisation radicalaire (chaîne polymère dite de type « vivante », de type bien connu en soi). Ainsi, par exemple, l'agent de contrôle peut être une chaîne polymère (de préférence hydrophile ou hydrodispersible) fonctionnalisée en bout de chaîne par un d'une par un groupe xanthate ou plus généralement comprenant un groupe -SC=S-, par exemple obtenu selon la technologie MADIX.

Alternativement, l'agent de contrôle employé dans l'étape (E) est un composé non polymère porteur d'un groupement assurant le contrôle de la polymérisation radicalaire, notamment un groupe thiocarbonylthio -S(C=S)-.

Selon une variante particulière, l'agent de contrôle de polymérisation radicalaire employé dans l'étape (E) est un polymère, avantageusement un oligomère, à caractère hydrosoluble ou hydrodispersible et porteur d'un groupe thiocarbonylthio -S(C=S)-, par exemple d'un groupe xanthate -SC=S-O-). Ce polymère, propre à agir à la fois comme agent de contrôle de la polymérisation et comme monomère dans l'étape (E), est également désigné par « pré-polymère » dans la suite de la description. Typiquement, ce pré-polymère est obtenu par polymérisation radicalaire de monomères hydrophiles en présence d'un agent de contrôle porteur d'un groupe thiocarbonylthio -S(C=S)-, par exemple un xanthate. Ainsi, par exemple, selon un mode de réalisation intéressant qui est illustré à la fin de la présente description, l'agent de contrôle employé dans l'étape (E) peut avantageusement être un pré-polymère porteur d'un groupe thiocarbonylthio - S(C=S)-, par exemple d'un groupe xanthate -SC=S-O-, obtenu à l'issue d'une étape (E⁰) de polymérisation radicalaire contrôlée préalable à l'étape (E). Dans cette étape (E⁰), on peut typiquement mettre en contact des monomères hydrophiles, avantageusement identiques à ceux mis en œuvre dans l'étape (E) ; un amorceur de polymérisation radicalaire ; et un agent de contrôle porteur d'un groupe thiocarbonylthio -S(C=S)-, par exemple un xanthate.

La mise en œuvre de l'étape (E⁰) précité préalablement à l'étape (E) permet, schématiquement, d'hydrophiliser un grand nombre d'agent de contrôle porteurs de fonctions thiocarbonylthio (par exemple des xanthate, qui sont plutôt hydrophobes par nature), en les convertissant des pré-polymères solubles ou dispersibles dans le milieu (M) de l'étape (E). De préférence, un pré-polymère synthétisé dans l'étape (E⁰) possède une chaîne polymère courte, par exemple comprenant un enchaînement de moins de 50, voire moins de 25 unités monomères, par exemple entre 2 et 15.

De façon inattendue, il s'avère que les conditions de l'étape (E) permettent de combiner les avantages à la fois de la polymérisation radicalaire contrôlée et de la polymérisation micellaire. Dans ce cadre, les inventeurs ont en particulier maintenant mis en évidence que la présence des micelles dans le milieu de polymérisation n'affecte pas l'action des agents de contrôle, qui permettent de réaliser une polymérisation contrôlée des monomères présents au sein du milieu aqueux de façon similaire à une polymérisation radicalaire contrôlée effectuée en milieu homogène, ce qui permet de prévoir et de contrôler très aisément la masse molaire moyenne du polymère synthétisé (cette masse est d'autant plus élevées que la concentration initiale en agent de contrôle dans le milieu est faible, cette concentration dictant le nombre de chaînes polymères en croissance). Dans le même temps, la présence de l'agent de contrôle ne nuit pas non plus à l'effet intéressant observé en polymérisation, à savoir le contrôle précis de la taille des blocs hydrophobes.

En plus de ce contrôle de la polymérisation des monomères, non obtenu dans les procédés plus usuels de polymérisation micellaire, la mise en oeuvre de l'étape (E) du procédé de l'invention permet en outre, de façon également totalement surprenante, d'accéder à des polymères de taille à la fois élevée et contrôlée, ce qui s'avère tout particulièrement inattendu au vu des tailles maximales qu'on sait obtenir aujourd'hui en employant des méthodes de polymérisation radicalaire contrôlée ou de polymérisation radicalaire micellaire en l'absence d'agents de contrôle.

Dans les conditions de l'étape (E), il s'avère possible de contrôler la masse molaire moyenne en nombre des polymères ce qui permet, entre autres, de réaliser des polymères de faibles masses.

Selon un mode de réalisation intéressant, le polymère associatif présent dans le fluide de fracturation de l'invention est synthétisé selon l'étape (E) précitée et a une masse comprise entre 50 000 et 10 000 000, de préférence, entre 750 000 et 5 000 000 g/mol, notamment entre 1 000 000 et 4 000 000 g/mol.Typiquement, de tels polymères peuvent être employés en concentration inférieure à leur concentration de recouvrement critique. En raison de leurs petites tailles, de tels polymères peuvent diffuser aux interfaces et participer à la modification des propriétés de ces interfaces ou surfaces.

Quelle que soit sa nature, le polymère associatif des fluides de fracturation selon l'invention est présent à hauteur de 0,1% à 3%, de préférence entre 0,2% et 1,5%, de préférence entre 0,3% et 1%, en masse par rapport à la masse totale du fluide de fracturation.

### les tensioactifs labiles :

Les tensioactifs labiles employés dans le cadre de l'invention sont des tensioactifs qui présentent des groupes ayant une affinité pour les groupes hydrophobes présents sur les polymères associatifs et d'autre part des chaînes hydrophiles. Avantageusement, il s'agit de tensioactifs hydrosolubles.

Par ailleurs, il s'agit de composés porteurs d'une fonction clivable. Cette fonction clivable est avantageusement une fonction ester.

Les tensioactifs labiles présent dans les fluides de fracturation de l'invention sont des tensioactifs non ioniques. Il peut également s'agir de tensioactifs ayant la structure de tensioactifs non ioniques, mais éventuellement porteur de groupe fonctionnalisés, éventuellement chargés, en extrémité de chaîne.

Le tensioactif labile employé dans le fluide de fracturation selon le premier aspect est l' Alkamuls PSML20 (dit aussi polysorbate 20), de formule suivante :

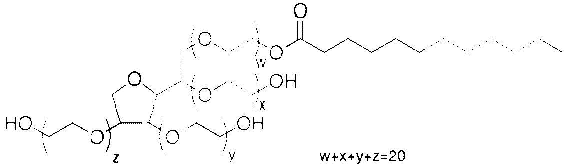

Ce composé est disponible auprès de la société Solvay.

### autres composés éventuellement présents dans le fluide de fracturation de l'invention :

### agent(s) de contrôle du pH

En combinaison avec les tensioactifs labiles porteurs d'une fonction clivable ester, le fluide de fracturation peut comprendre des agents de régulation ou de contrôle du pH, notamment des tampons, des bases ou des acides. En fonction du profil d'évolution de viscosité recherché, on se placera préférablement dans une gamme de pH voisin de la neutralité (entre 6 et 8, plus préférentiellement entre 6,5 et 7,5 si on souhaite que la viscosité augmente lentement. A l'inverse, on se placera dans des conditions acides (par exemple inférieures à 4, voire à 3) ou basique (supérieures à 9, voire à 10) si on souhaite une augmentation plus rapide de la viscosité.

### « Breakers »

Selon un mode de réalisation intéressant, la composition injectée peut comprendre en outre un ou plusieurs composés amphiphiles dit « breaker », propre à abaisser la viscosité dans les zones fracturées, après que la fracturation a été réalisée.

Ces breakers sont typiquement des tensioactifs non labiles introduit dans la formulation sous une forme encapsulée. On peut notamment utiliser des tensioactifs sous forme de granulés qu'on enrobe d'une pellicule protectrice de cire, typiquement par revêtement en lit fluidisé.

Lorsque le fluide de fracturation contient des tensioactifs de type breakers sous forme encapsulée, ceux-ci sont en général sans effet jusqu'à la fin de l'opération de fracturation (ils sont simplement véhiculés par le fluide de fracturation, et leur encapsulation les rend au départ inerte chimiquement). Après l'arrêt de l'injection sous pression du fluide de fracturation, les capsules se retrouvent dans les fractures, où elles sont soumise à la pression de la fracture qui tend à se refermer, et elles se retrouvent « écrasées », tout particulièrement lorsque des agents de soutènement sont présents. Ceci induit une libérations des tensioactifs, qui deviennent alors propres à interagir avec les polymères associatifs pour diminuer la viscosité. La présence de tels breakers permet ainsi de libérer les fractures de la composition gélifiée qu'il contient suite à la fracturation (ainsi, l'augmentation de la viscosité (formation d'un gel) n'a lieu que ponctuellement lors de la fracturation, à savoir entre la lyse du tensioactif labile et la libération du tensioactif non labile, ce qui permet de minimiser encore l'énergie de pompage. Un autre avantage est que ceci permet de réduire le temps avant la mise en production du puits.

L'invention va maintenant être illustrée par l'exemple ci-après.

### EXEMPLE

### Synthèse d'un polymère associatif ( poly acrylamide/AMPS/LMA 2000 000 g/mol)

Dans un ballon de 500 mL, on a introduit, à température ambiante (20°C), 29,3g d'une solution de SDS à 30%, 89,03g d'eau distillée, 1,66g de méthacrylamide de lauryle (monomère LMA). Le mélange a été porté sous agitation à l'aide d'un barreau aimanté pendant 6h, jusqu'à obtention d'un solution micellaire limpide.

Dans un ballon de 250 mL, on a introduit, à température ambiante (20°C), 32,9g de la solution micellaire ainsi préparée, 7,53g d'eau, 40,7g d'acrylamide (solution aqueuse a 50% en masse), 32g AMPS (solution aqueuse a 51% en masse), 0,454 g de Rhodixan A1 (solution éthanolique à 1,0% en masse) et 6,00g de persulfate d'ammonium (solution aqueuse a 0,67% en masse). Le mélange a été dégazé par bullage d'azote pendant 20 minutes. On a ajouté au milieu, en une fois, 1,5g du formaldéhyde sulfoxylate de sodium, sous forme de solution aqueuse à 0,13 % en masse. Le mélange a été dégazé par bullage d'azote pendant 15 minutes.

On a alors laissé la réaction de polymérisation se dérouler sous agitation pendant 16 heures à température ambiante (20°C).

### réduction de la viscosité par ajout de tensioactif labile

Le polymère préparé précédemment a été mis en solution à 0,5% en masse en polymère dans une solution aqueuse de NaCl à 15% en masse en présence de tensioactif labile Alkamuls PSML20 à différente concentrations.

Pour chacune des concentrations, la viscosité du mélange a été mesurée à 80°C, à l'aide d'un rhéomètre AR2000 (TA Instrument, Surrey, Grande-Bretagne), équipé d'une géométrie de type Couette. Les résulats sont rportés dans le tableau ci-après :

| concentration (ppm) | viscosité à 1s-1 (mPa.s) |
|---|---|
| 0 | 3430 |
| 50 | 1140 |
| 100 | 360 |
| 250 | 168 |
| 500 | 48 |
| 1000 | 10 |

La diminution de viscosité par ajout de tensioactif labile est ici mise en évidence au-delà de 500ppm.

### hydrolyse du tensioactif labile - effet sur la viscosité

Le polymère de l'exemple 1 a été mis en solution à 0.5%wt dans NaCl 15% en présence de 0.5% Alkamuls PSML20. De la soude est ajoutée pour obtenir une concentration de 83mmol/L. La viscosité de la solution ainsi obtenue est de 10cP à 25°C (à 1s⁻¹).

La solution a été placée en étuve à 80°C pendant 16 h. A l'issue de ce traitement, la viscosité de la solution a été mesurée égale à 4200cP à 1s⁻¹ (contre 3600cP pour une solution de polymère sans tensioactif obtenue après hydratation par chauffage pendant 4 h à 80°C).

## Revendications

1. Fluide de fracturation comprenant, en milieu aqueux :
- un polymère associatif ; et
- un tensioactif labile porteur d'une fonction clivable qui est une fonction ester, en une quantité suffisante pour réduire ou inhiber l'effet d'augmentation de la viscosité induit par ledit polymère associatif ;
dans lequel le tensioactif labile est de formule suivante : 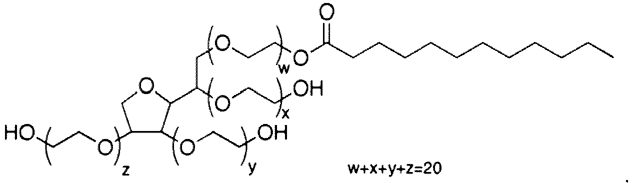
dans lequel le polymère associatif comporte un squelette de nature hydrophile et inclut, le long des chaînes et/ou à tout ou partie des extrémités de celles-ci, des quantités de l'ordre de 0,001% à 10% en mole de fonctions de nature hydrophobes,
dans lequel le polymère associatif est présent à hauteur de 0,1% à 3% en masse par rapport à la masse totale du fluide de fracturation, et
dans lequel le polymère associatif et la concentration du tensioactif labile sont choisis de façon à ce que la viscosité du fluide de fracturation soit maintenue réduite lors de l'injection du fluide de fracturation jusqu'à une zone où on souhaite effectuer la fracturation, la viscosité étant maintenue réduite par rapport à la viscosité qu'aurait le fluide de fracturation sans le tensioactif labile.

2. Fluide de fracturation selon la revendication 1, dans lequel le polymère associatif est obtenu selon un procédé de préparation qui comprend une étape (E) de polymérisation radicalaire micellaire dans laquelle on met en contact, au sein d'un milieu aqueux (M) :
- des monomères hydrophiles, solubilisés ou dispersés dans ledit milieu aqueux (M) ;
- des monomères hydrophobes sous la forme d'une solution micellaire, contenant, à l'état dispersé au sein du milieu (M), des micelles comprenant ces monomères hydrophobes, cet état dispersé étant optionnellement obtenu à l'aide d'au moins un tensioactif;
- au moins un amorceur de polymérisation radicalaire hydrosoluble ou hydrodispersible ; et
- au moins un agent de contrôle de polymérisation radicalaire.

3. Fluide de fracturation selon la revendication 2, dans lequel l'agent de contrôle de polymérisation radicalaire employé dans l'étape (E) est un composé qui comprend un groupe thiocarbonylthio -S(C=S)-.

4. Fluide de fracturation selon la revendication 3, dans lequel l'agent de contrôle de polymérisation employé dans l'étape (E) est un xanthate.

5. Fluide de fracturation selon l'une quelconque des revendications 1 à 4, où le polymère associatif est présent à hauteur de 0,1 à 3% en masse par rapport à la masse totale du fluide de fracturation.

6. Procédé de récupération d'hydrocarbures dans un réservoir hydrocarboné, comprenant :
- une étape d'injection d'un fluide de fracturation selon l'une des revendications 1 à 5 au sein d'un réservoir hydrocarboné où les conditions de température et/ou de pH sont propres à lyser tout ou partie du tensioactif labile.

7. Utilisation du fluide de fracturation selon l'une quelconque des revendications 1 à 5 en tant que fluide de fracturation, comprenant la pénétration du fluide dans la zone où on souhaite effectuer la fracturation et la lyse du tensioactif labile.

## Patentansprüche

1. Frakturierungsflüssigkeit, die in einem wässrigen Medium Folgendes umfasst:
- ein assoziatives Polymer; und
- ein labiles Tensid, das eine spaltbare Funktion enthält, bei der es sich um eine Esterfunktion handelt, in einer Menge, die ausreichend ist, um die Wirkung einer vom assoziativen Polymer induzierten Viskositätserhöhung zu vermindern oder zu hemmen;
wobei das labile Tensid die folgende Formel aufweist: 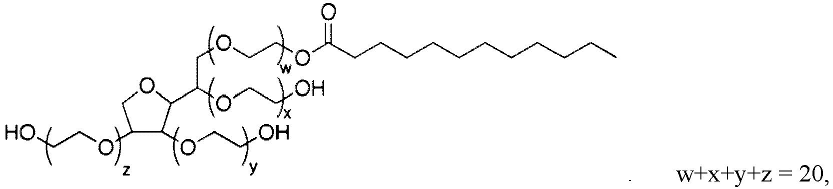
wobei das assoziative Polymer ein Rückgrat mit hydrophiler Beschaffenheit umfasst und entlang der Ketten und/oder an allen oder einem Teil seiner Enden Mengen von Funktionen mit hydrophober Beschaffenheit in der Größenordnung von 0,001 Mol-% bis 10 Mol-% einschließt,
wobei das assoziative Polymer in einer Menge von 0,1 Gew.-% bis 3 Gew.-%, bezogen auf das Gesamtgewicht der Frakturierungsflüssigkeit, vorhanden ist, und
wobei das assoziative Polymer und die Konzentration des labilen Tensids so ausgewählt sind, dass die Viskosität der Frakturierungsflüssigkeit beim Einspritzen der Frakturierungsflüssigkeit bis zu einer Zone, in der die Frakturierung erfolgen soll, vermindert bleibt, wobei die Viskosität in Bezug auf die Viskosität vermindert beibehalten wird, welche die Frakturierungsflüssigkeit ohne das labile Tensid hätte.

2. Frakturierungsflüssigkeit nach Anspruch 1, wobei das assoziative Polymer gemäß einem Herstellungsverfahren erhalten wird, das einen Schritt (E) einer mizellaren radikalischen Polymerisation umfasst, wobei in einem wässrigen Medium (M) Folgendes in Kontakt gebracht wird:
- hydrophile Monomere, die im wässrigen Medium (M) gelöst oder dispergiert sind;
- hydrophobe Monomere in Form einer mizellaren Lösung, die in dem im Medium (M) dispergierten Zustand Mizellen enthalten, die diese hydrophoben Monomere umfassen, wobei dieser dispergierte Zustand gegebenenfalls mittels mindestens eines Tensids erhalten wird;
- mindestens ein wasserlöslicher oder wasserdispergierbarer Initiator einer radikalischen Polymerisation; und
- mindestens ein Mittel zur Steuerung der radikalischen Polymerisation.

3. Frakturierungsflüssigkeit nach Anspruch 2, wobei es sich bei dem in Schritt (E) verwendeten Mittel zur Steuerung der radikalischen Polymerisation um eine Verbindung handelt, die eine Thiocarbonylthio-Gruppe, -S(C=S)-, umfasst.

4. Frakturierungsflüssigkeit nach Anspruch 3, wobei es sich bei dem in Schritt (E) verwendeten Mittel zur Steuerung der radikalischen Polymerisation um ein Xanthat handelt.

5. Frakturierungsflüssigkeit nach einem der Ansprüche 1 bis 4, wobei das assoziative Polymer in einer Menge von 0,1 bis 3 Gew.-%, bezogen auf das Gesamtgewicht der Frakturierungsflüssigkeit, vorhanden ist.

6. Verfahren zur Gewinnung von Kohlenwasserstoffen in einer Kohlenwasserstoff-Lagerstätte, das Folgendes umfasst:
- einen Schritt eines Einspritzens einer Frakturierungsflüssigkeit nach einem der Ansprüche 1 bis 5 in eine Kohlenwasserstoff-Lagerstätte, wobei die Temperatur- und/oder pH-Wert-Bedingungen geeignet sind, um das gesamte labile Tensid oder einen Teil davon zu lysieren.

7. Verwendung der Frakturierungsflüssigkeit nach einem der Ansprüche 1 bis 5 als Frakturierungsflüssigkeit, die das Eindringen der Flüssigkeit in der Zone umfasst, in der die Frakturierung und die Lyse des labilen Tensids erfolgen sollen.

## Claims

1. Fracturing fluid comprising, in an aqueous medium:
- an associative polymer; and
- a labile surfactant bearing a cleavable function that is an ester function, in an amount sufficient to reduce or inhibit the effect of increasing the viscosity induced by said associative polymer;
wherein the labile surfactant is of the following formula: 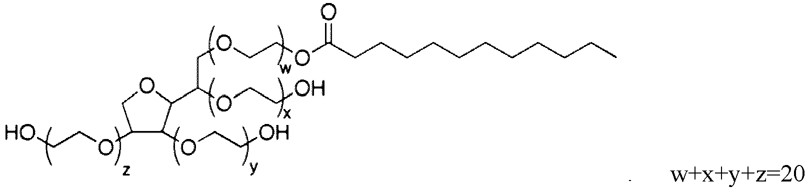
wherein the associative polymer comprises a backbone of hydrophilic nature and includes, along the chains and/or at all or some of the ends thereof, amounts of the order of 0.001 mol% to 10 mol% of functions of hydrophobic nature,
wherein the associative polymer is present in an amount of 0.1% to 3% by weight relative to the total weight of the fracturing fluid, and
wherein the associative polymer and the concentration of the labile surfactant are chosen so that the viscosity of the fracturing fluid is kept reduced during the injection of the fracturing fluid to a zone where it is desired to carry out the fracturing, the viscosity being kept reduced compared to the viscosity that the fracturing fluid would have without the labile surfactant.

2. Fracturing fluid according to claim 1, wherein the associative polymer is obtained according to a preparation process that comprises a step (E) of micellar radical polymerization in which the following are placed in contact, in an aqueous medium (M):
- hydrophilic monomers, dissolved or dispersed in said aqueous medium (M);
- hydrophobic monomers in the form of a micellar solution, containing, in the dispersed state within the medium (M), micelles comprising these hydrophobic monomers, this dispersed state being optionally obtained using at least one surfactant;
- at least one water-soluble or water-dispersible radical polymerization initiator; and
- at least one radical polymerization control agent.

3. Fracturing fluid according to claim 2, wherein the radical polymerization control agent used in step (E) is a compound which comprises a thiocarbonylthio group -S(C=S)-.

4. Fracturing fluid according to claim 3, wherein the polymerization control agent used in step (E) is a xanthate.

5. Fracturing fluid according to any one of claims 1 to 4, wherein the associative polymer is present in an amount of 0.1% to 3% by weight relative to the total weight of the fracturing fluid.

6. Process for recovery of hydrocarbons in a hydrocarbon reservoir, comprising:
- a step of injecting a fracturing fluid according to one of claims 1 to 5 into a hydrocarbon reservoir where the temperature and/or pH conditions are suitable for lysing all or some of the labile surfactant.

7. Use of the fracturing fluid according to any one of claims 1 to 5 as a fracturing fluid, comprising the penetration of the fluid into the zone where it is desired to carry out the fracturing and the lysis of the labile surfactant.
